# FASCICULE DE BREVET EUROPEEN

(11) **EP 2 780 107 B1**
(45) Date de publication et mention de la délivrance du brevet: **03.02.2016**
(21) Numéro de dépôt: 12787439.4
(22) Date de dépôt: 15.11.2012
(51) Int. Cl.: B01J 19/24, B01J 8/02, B01D 53/88, B01D 53/86

(54) **DISPOSITIF D'UN TRAITEMENT D'UN FLUX AMONT PAR UN PRODUIT SOLIDE ET PROCEDE DE TRAITEMENT ASSOCIE**
VORRICHTUNG ZUR BEHANDLUNG EINES AUFWÄRTSFLUSSES MIT EINEM FESTPRODUKT UND BEHANDLUNGSVERFAHREN DAFÜR
DEVICE FOR TREATING AN UPSTREAM FLOW WITH A SOLID PRODUCT AND ASSOCIATED TREATMENT METHOD

(30) Priorité: 18.11.2011 FR 1160528
(43) Date de publication de la demande: 24.09.2014
(73) Titulaire: Rhodia Operations, 93306 Aubervilliers (FR)
(72) Inventeur: CRAMPE, Christian, F-69270 Couzon-au-Mont-d'Or (FR); BOURGEOIS, Olivier, F-71290 L'abergement De Cuisery (FR)
(74) Mandataire: Chatelan, Florence Anne
(86) Numéro de dépôt international: PCT/EP2012/072740
(87) Numéro de publication internationale: WO 2013/072420

(56) Documents cités:
- EP-A2- 0 151 933
- WO-A1-2009/147503
- WO-A1-2010/046675
- FR-A- 1 437 912

## Description

La présente invention concerne un dispositif de traitement d'un flux amont sur un produit solide, comportant :
- un support,
- au moins un panier porté par le support, le panier comportant une paroi ajourée amont et une paroi ajourée aval délimitant entre elles un espace intermédiaire de réception du produit solide, la paroi ajourée amont délimitant, à l'opposé de l'espace intermédiaire, un passage d'amenée du flux amont, la paroi ajourée aval délimitant, à l'opposé de l'espace intermédiaire, un passage d'évacuation d'un flux traité.

Un tel dispositif est destiné à être placé par exemple dans une installation de production chimique. Le dispositif de traitement est destiné à être inséré dans une enceinte de réaction de l'installation, le support du dispositif étant fixé dans l'enceinte.

Le flux amont est en particulier un flux de gaz. Le flux amont présente avantageusement une température élevée, par exemple supérieure à 750°C et une pression proche, voir légèrement inférieure à la pression atmosphérique ou supérieure.

Le flux amont contient avantageusement un gaz devant être traité, tel qu'un oxyde d'azote. Le flux amont résulte notamment de la transformation de l'ammoniaque pour former de l'acide nitrique, ou du cyanure d'hydrogène.

Le produit solide de traitement est en particulier un catalyseur solide qui se présente sous forme d'un matériau divisé comprenant des morceaux, des grains ou une poudre.

Pour produire de l'acide nitrique ou du cyanure d'hydrogène à partir d'ammoniaque, il est nécessaire d'oxyder l'ammoniaque sur un catalyseur à haute température et à pression faible à élevée, par exemple par une réaction d'Ostwald ou d'Andrussow.

Le flux gazeux obtenu contient des oxydes d'azote qui sont en partie recyclés. Cependant, une partie des oxydes d'azote produits doivent être abattus pour éviter leur rejet dans l'atmosphère.

En effet, les contraintes actuelles sur les émissions d'oxydes d'azote limitent le rejet dans l'atmosphère de ces gaz ou autorisent dans certains cas un rejet partiel moyennant le paiement de taxes qui augmentent le coût global du procédé.

Pour abattre les oxydes d'azote, il est connu de placer un catalyseur particulier dans le réacteur. Ce catalyseur est disposé en série avec celui destiné à réaliser l'oxydation de l'ammoniaque. Le catalyseur d'abattement des oxydes d'azote est par exemple formé d'oxydes métalliques sous forme de particules.

Un tel catalyseur présente le désavantage d'augmenter la perte de charge au niveau des gaz produits par le procédé. Ceci augmente notablement la compression nécessaire, et les coûts associés à cette compression.

Pour pallier ce problème, il peut être souhaitable de diminuer la perte de charge en réduisant la quantité de catalyseur. Dans ce cas, le traitement du flux gazeux amont est insuffisant.

Afin de résoudre ces problèmes, WO 2010/046675 décrit un dispositif du type précité qui comporte un panier circonférentiel porté par un support fixé dans le réacteur.

Le panier définit un orifice central, par lequel le flux amont sous pression est amené, et un espace annulaire extérieur, par lequel le flux aval traité est extrait.

Le panier est fixé rigidement entre une couronne supérieure convergente, qui obture le panier vers le haut, et un disque aval, qui obture le panier vers le bas.

Un tel dispositif ne donne pas entière satisfaction. En effet, lors de la montée en température du dispositif, notamment lors du démarrage de l'installation, les différences de température entre le flux amont et le flux aval sont considérables, notamment supérieures à 100°C. Ces différences de température peuvent atteindre plus de 500°C dans certains cas.

Le dispositif étant monté rigidement, les parois ajourées délimitant les paniers se déforment fortement.

Le flux circulant en outre radialement depuis l'intérieur vers l'extérieur du panier, la paroi aval se déforme moins que la paroi amont, ce qui établit des contraintes et provoque un tassement du catalyseur.

Dans certains cas, les déformations sont telles qu'elles provoquent même une rupture des grilles délimitant les parois ajourées. Le catalyseur peut alors s'échapper en partie hors du panier, ce qui diminue son niveau. Ceci conduit à ce qu'une partie du flux amont passe en aval du dispositif sans être entrée en contact avec le catalyseur. L'abattement en oxyde d'azote diminue alors fortement.

Un but de l'invention est donc d'obtenir un dispositif contenant un produit de traitement solide, à travers lequel passe un flux amont à traiter, le dispositif étant apte à résister de manière efficace à de fortes différences de température, notamment lors du démarrage du procédé, ou lorsque le procédé n'est pas encore en régime établi.

A cet effet, l'invention a pour objet un dispositif du type précité, caractérisé en ce que la paroi ajourée amont et la paroi ajourée aval sont montées librement déplaçables l'une par rapport à l'autre et par rapport au support, sur une course de dilatation donnée.

Le dispositif selon l'invention peut comprendre l'une ou plusieurs des caractéristiques suivantes, prise(s) isolément ou suivant toutes combinaisons techniquement possibles :
- la paroi ajourée amont et la paroi ajourée aval sont de révolution autour d'un axe central (A-A'), la paroi ajourée amont et la paroi ajourée aval étant montées librement déplaçables radialement par rapport à l'axe central (A-A') sur la course de dilatation donnée,
- le passage d'amenée du flux amont est situé radialement à l'extérieur par rapport au passage d'évacuation du flux traité vis-à-vis de l'axe central (A-A'),
- chaque panier comporte une structure de base, la paroi ajourée amont et la paroi ajourée aval étant posées sur la structure de base, la paroi ajourée amont et la paroi ajourée aval étant montées glissantes sur la structure de base, la structure de base étant avantageusement montée glissante sur le support,
- la structure de base comporte un déflecteur destiné à être placé en regard de la paroi ajourée amont pour délimiter le passage d'amenée et/ou en regard d'une paroi ajourée aval pour délimiter le passage d'évacuation,
- au moins une structure de base délimite un déflecteur extérieur, le déflecteur extérieur étant relié au support par l'intermédiaire d'un organe d'absorption des dilatations, avantageusement d'un soufflet de dilatation,
- il comporte une chicane destinée à être insérée dans une partie inférieure de l'espace intermédiaire pour être recouverte de produit solide,
- le panier comporte une coiffe disposée au-dessus de la paroi ajourée amont et de la paroi ajourée aval, un joint d'étanchéité étant inséré entre la coiffe et la paroi ajourée amont,
- la paroi ajourée amont comporte une région supérieure pleine, et une région inférieure ajourée, la région supérieure pleine et la région inférieure ajourée étant destinées à être placées en regard du passage d'amenée,
- il comporte une pluralité de paniers, chaque panier comprenant une paroi ajourée amont et une paroi ajourée aval montées librement déplaçables sur une course de dilatation donnée, les paniers étant disposés les uns dans les autres,
- le support présente une pluralité d'ouvertures de passage de flux, au moins un parmi le passage d'amenée et le passage d'évacuation débouchant en regard des ouvertures de passage,
- le support comprend une partie fixe extérieure et une base portant le ou chaque panier, la base étant librement déplaçable sur une course de dilatation par rapport à la partie fixe extérieure, avantageusement en étant articulée par l'intermédiaire d'une pluralité de tirants,
- le support définit une surface de glissement du ou de chaque panier.

L'invention a également pour objet un procédé comportant les étapes suivantes :
- fourniture d'un dispositif tel que défini plus haut, le ou chaque panier comportant un produit solide de traitement dans son espace intermédiaire,
- amenée d'un flux amont dans le passage d'amenée,
- passage du flux amont à travers la paroi ajourée amont, et mise en contact du flux amont avec le produit solide pour engendrer un flux aval traité,
- évacuation du flux aval à travers la paroi ajourée aval et à travers le passage d'évacuation,
caractérisé en ce que la paroi ajourée amont et la paroi ajourée aval se déplacent librement l'une par rapport à l'autre et par rapport au support sur une course de dilatation donnée lors de la mise en oeuvre des étapes précédentes.

Le procédé selon l'invention peut comprendre l'une ou plusieurs des caractéristiques suivantes, prise(s) isolément ou suivant toutes combinaisons techniquement possibles :
- la différence de température entre le flux amont et le flux aval est supérieure à 100° C, avantageusement supérieure à 250° C.
- le flux amont est un flux gazeux, notamment un flux contenant un oxyde d'azote, le produit de traitement solide étant un catalyseur, notamment un catalyseur d'oxydation ou un catalyseur d'abattement d'un gaz à éliminer.

L'invention sera mieux comprise à la lecture de la description qui va suivre, donnée uniquement à titre d'exemple, et fait en se référant aux dessins annexés, sur lesquels :
- la figure 1 est une vue, prise en coupe suivant un plan vertical médian, d'une installation comportant un premier dispositif de traitement selon l'invention ;
- la figure 2 est une vue d'une section partielle marquée II-II sur la figure 1 ;
- la figure 3 est une vue d'un détail illustrant un panier du dispositif de la figure 1 ;
- la figure 4 est un schéma de principe illustrant le comportement du dispositif lors de son utilisation.

Dans tout ce qui suit, les termes « amont » et « aval » s'entendent généralement par rapport au sens normal de circulation d'un fluide dans le dispositif.

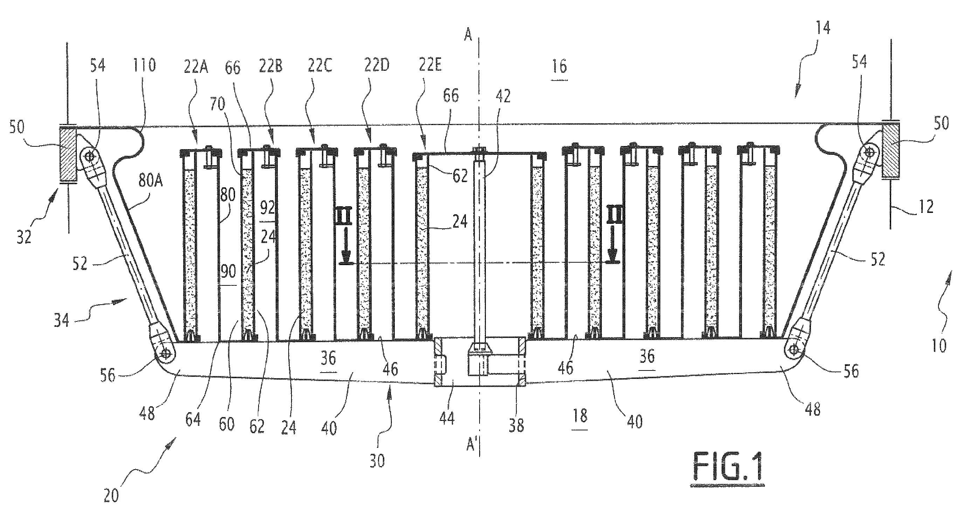

Une première installation 10 de production chimique est illustrée partiellement sur la figure 1. Cette installation 10 comporte une enceinte 12, dans laquelle un flux amont est engendré, et un dispositif 14 de traitement du flux amont pour former un flux aval traité, après passage dans le dispositif 14.

Dans l'exemple représenté sur la figure 1, le flux amont est un flux gazeux. Il est avantageusement engendré dans une partie amont 16 de l'enceinte 12. La partie amont 16 est située au dessus du dispositif 14 sur la Figure 1.

Le flux amont traverse le dispositif 14 pour rejoindre une partie aval 18 de l'enceinte 12 après traitement dans le dispositif 14. La partie aval 18 est située en dessous du dispositif 14 sur la Figure 1.

Le flux amont présente en général une température et une pression faible à élevée.

La pression du gaz dans le flux amont est par exemple inférieure à 1 bar absolu, notamment inférieure à 0.95 bars absolu. Elle peut également être supérieure à 2 bars, notamment supérieure à 4 bars.

La température du flux amont est par exemple supérieure à 750°C, notamment supérieure à 1000°C.

Dans un mode de réalisation particulier, l'installation 10 est une installation de production d'acide nitrique ou de cyanure d'hydrogène à partir d'ammoniaque.

Dans ce cas, le flux amont est un flux d'ammoniaque, ou un flux produit à partir d'ammoniaque, notamment à partir d'une oxydation de l'ammoniaque. Le flux amont contient par exemple de l'ammoniaque n'ayant pas été oxydé, de l'acide nitrique et au moins un gaz à traiter dans le dispositif 14, notamment un oxyde d'azote.

L'enceinte 12 est par exemple un réacteur chimique constitué par une cuve. En variante, l'enceinte 12 est un conduit de circulation continue d'un flux.

Le volume de l'enceinte 12 est avantageusement supérieur à 10 m3. Il est notamment compris entre 1 m3 et 50 m3.

Le dispositif 14 est interposé à travers l'enceinte 12. Il est ainsi fixé dans l'enceinte 12 pour que la totalité du flux amont passe à travers le dispositif 14 pour y être traité.

Comme illustré par la figure 1, le dispositif de traitement 14 comporte un support 20 et un ensemble de paniers 22A à 22E disposés les uns dans les autres. Chaque panier 22A à 22E contient un produit solide 24 de traitement du flux amont.

Le produit solide 24 est avantageusement sous forme d'une matière solide divisée, par exemple sous forme de poudre, de grains ou de morceaux de solides. Il présente généralement une forme de paillettes, de sphères, d'anneaux, de cylindres ou d'extrudés poreux. La dimension maximale de chaque solide individuel du produit solide 24 est par exemple comprise entre 1 mm et 20 mm, en particulier entre 3 mm et 10 mm.

Le produit solide 24 constitue avantageusement un catalyseur de la réaction de traitement du flux amont. Le produit solide est par exemple un catalyseur d'oxydation, un catalyseur d'abattement d'un gaz à traiter ou un mélange de ces produits.

Dans le cas où le produit solide 24 est un catalyseur d'oxydation de l'ammoniaque, il peut être choisi parmi un métal noble du groupe du platine, supporté ou non, pouvant comprendre un métal de base ou un oxyde de métal de base, le métal de base étant un métal de transition ou une terre rare.

En variante, le catalyseur d'oxydation est un mélange de plusieurs métaux de base avec plusieurs métaux précieux.

Des exemples de catalyseurs d'oxydation sont donnés à la page 3 de WO 2010/046675 et ne seront pas repris plus en détails ici.

Dans le cas ou le produit solide 24 est un catalyseur d'abattement des oxydes d'azote, il peut être choisi parmi un métal supporté, un oxyde de métal pur ou mélangé, ou un système zéolitique, par exemple parmi les produits décrits aux pages 30 à 32 de l'article Applied Catalysis B : Environmental, 9 (1996), pages 25 à 64, dans les références jointes à cet article, ou aux pages 4 à 6 de WO 2010/046675. Ces catalyseurs ne seront pas décrits plus en détail ici.

Comme illustré par la Figure 1, le support 20 comporte une base ajourée 30 portant les paniers 22A à 22E, et une partie extérieure 32 de fixation sur l'enceinte 12.

Dans cet exemple, le support 20 comporte en outre un ensemble 34 d'articulation de la base 30 par rapport à la partie extérieure de fixation 32 pour absorber les dilatations transversales de la base 30.

La base 30 s'étend dans cet exemple autour d'un axe central A-A' représenté vertical sur la Figure 1. Elle définit une pluralité d'ouvertures 36 de passage du flux traité, s'étendant en regard et en dessous des paniers 22A à 22E.

La base 30 comporte ici une structure centrale 38 et une pluralité de poutres disjointes 40 s'étendant radialement à partir de la structure centrale 38 à l'écart de l'axe A-A'.

La base 30 comporte en outre une tige centrale 42 de fixation d'au moins un panier 22.

La structure centrale 38 est avantageusement en forme de bague. Elle délimite une ouverture axiale traversante 44.

Les poutres 40 sont fixées extérieurement sur la structure centrale 38. Elles délimitent entre elles les ouvertures 36 de passage du flux traité. Elles s'étendent jusqu'à une extrémité libre 48 située à distance des parois de l'enceinte 12.

La hauteur des poutres est avantageusement supérieure à leur largeur.

La base 30 définit une surface 46 supérieure de glissement des paniers 22A à 22E, qui est avantageusement située sur les poutres 40.

La tige 42 est raccordée à la bague 38. Elle fait saillie vers le haut à travers l'ouverture axiale traversante 44 au-dessus de la surface de glissement 46.

La partie extérieure 32 est par exemple formée par une couronne 50 fixée sur la paroi de l'enceinte. La couronne 50 présente un diamètre supérieur au diamètre défini par l'embase 30.

La partie extérieure 32 est située au-dessus de la surface 46 de glissement des paniers. La partie extérieure 32 est maintenue de manière fixe sur une paroi de l'enceinte 12.

Dans l'exemple représenté sur la figure 1, l'ensemble d'articulation 34 comporte une pluralité de tirants 52 raccordant la partie extérieure 32 à l'embase 30. Chaque tirant 52 est ainsi articulé en un point supérieur 54 sur la partie extérieure 32, et en un point inférieur 56 au voisinage d'une extrémité libre 48 d'une poutre.

Chaque tirant 52 fait saillie vers le bas, avantageusement de manière inclinée par rapport à l'axe A-A' à partir de la partie extérieure 32.

La base 30 est suspendue vers le bas à partir de la partie extérieure 32.

Ainsi, lors de la dilatation de chaque poutre 40, provoquant une expansion radiale de la base 30, les tirants 52 pivotent autour des points d'articulation 54, 56, afin d'absorber les déformations de l'embase 30 en maintenant la surface de glissement 46 horizontale.

Dans l'exemple représenté sur la figure 1, le dispositif 14 comprend une pluralité de paniers 22A à 22E, chaque panier 22A à 22E étant de révolution autour de l'axe A-A'. Le nombre de paniers 22A à 22E est généralement compris entre 1 et 10.

Dans cet exemple, les paniers 22A à 22E sont disposés de manière concentrique les uns dans les autres. Ainsi, l'étendue transversale maximale de chaque panier 22A à 22E diminue en se déplaçant du panier 22A le plus extérieur au panier 22E le plus intérieur.

Comme illustré par la figure, chaque panier 22A à 22E comporte une paroi ajourée amont 60, et une paroi ajourée aval 62. Chaque panier 22A à 22E comporte en outre une structure de base 64 destinée à glisser sur la surface de glissement 46 définie par l'embase 30, et une coiffe 66.

Chaque panier 22A à 22E comprend également un ensemble d'étanchéité 68 pour obliger le flux gazeux amont à traverser le panier 22A à 22E et à entrer en contact avec le produit solide 24.

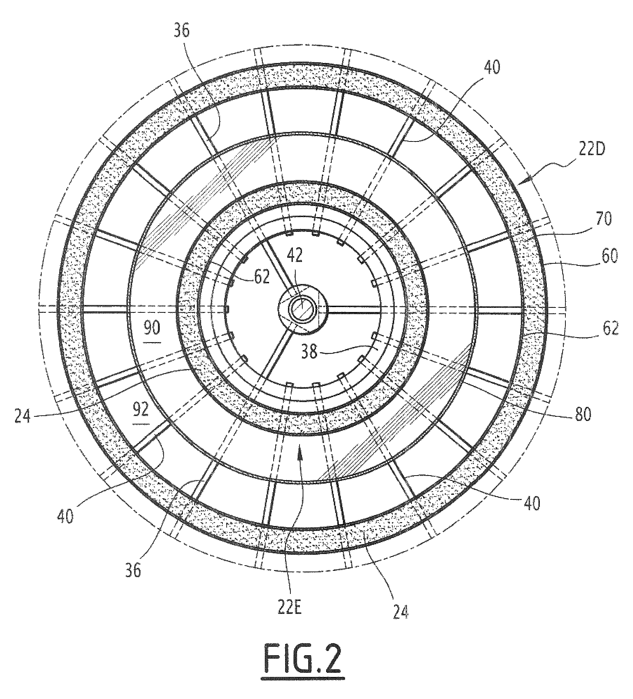

Comme illustré par les figures 1, 2 et 3, la paroi amont 60 et la paroi aval 62 sont de révolution autour de l'axe A-A'. Elles sont avantageusement homothétiques l'une de l'autre par rapport à l'axe A-A'. En particulier, les parois 60, 62 sont cylindriques d'axe A-A' et concentriques.

La paroi amont 60 et la paroi aval 62 délimitent entre elles un espace intermédiaire 70 contenant le produit solide 24. Cet espace 70 est avantageusement annulaire.

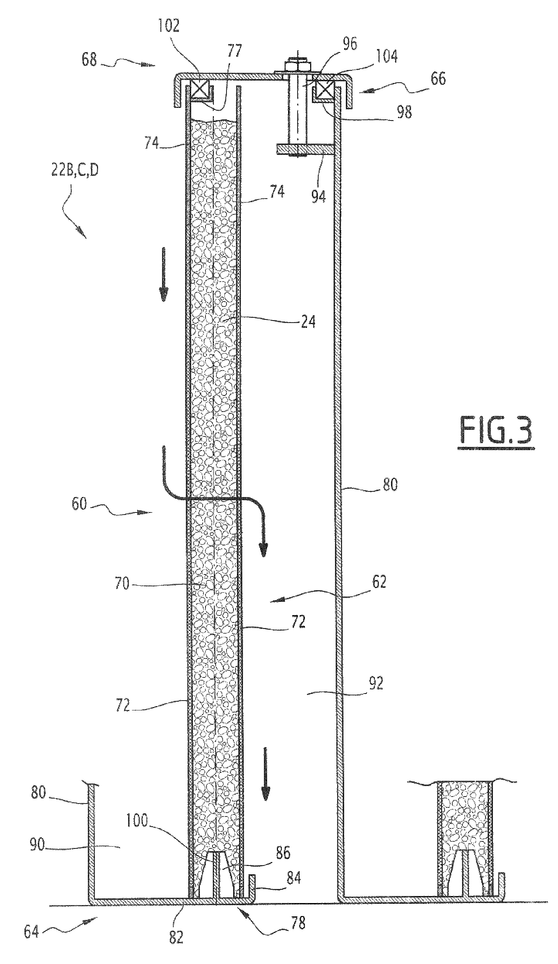

En référence à la Figure 3, la paroi amont 60 comporte une région inférieure ajourée 72 et avantageusement, une région supérieure pleine 74.

La région inférieure ajourée 72 est formée par exemple par une grille. La grille délimite une pluralité d'ouvertures de communication entre l'espace intermédiaire 70 et l'extérieur. Les ouvertures présentent des dimensions adaptées pour contenir le produit solide 24. Les dimensions transversales maximales des ouvertures sont par exemple inférieures à 2.5 mm et comprises entre 0.5 mm et 15 mm.

La région pleine supérieure 74 présente une hauteur inférieure à celle de la région ajourée 72, par exemple inférieure à 30% de la hauteur de la région ajourée 72.

La paroi amont 60 présente une gouttière supérieure 77 de réception de l'ensemble d'étanchéité 68, comme on le verra plus bas.

La paroi aval 62 est située intérieurement par rapport à la paroi amont 60 vis-à-vis de l'axe central A-A'. La paroi aval 62 présente également une région inférieure ajourée 70, analogue à la région inférieure 72 de la paroi amont 60 et avantageusement, une région supérieure 74 pleine, analogue à la région supérieure 74 de la paroi amont 60.

L'espace intermédiaire 70 présente une épaisseur, prise perpendiculairement à l'axe A-A', inférieure à la hauteur de chaque paroi 60, 62. L'espace intermédiaire 70 est sensiblement rempli de produit solide 24. La hauteur de produit solide 24 dans l'espace intermédiaire 70 est supérieure à la hauteur de la région ajourée 72.

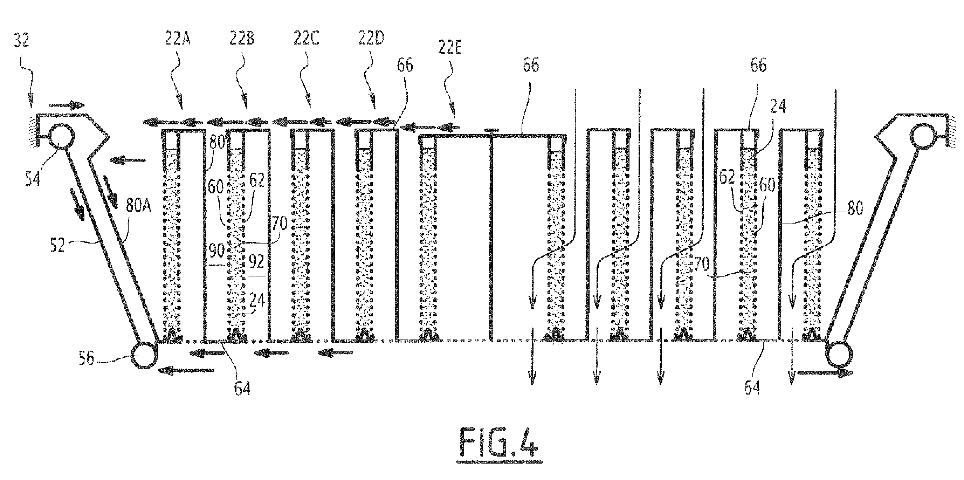

Selon l'invention, et comme visible sur la Figure 4, la paroi amont 60, et la paroi aval 62 sont déplaçables librement l'une par rapport à l'autre sur une course radiale de dilatation donnée, et par rapport au support 20 pour permettre une dilatation différentielle des parois ajourées 60, 62.

A cet effet, la paroi amont 60, comme la paroi aval 62 sont posées sans être fixées sur chaque structure de base 64, en étant aptes à glisser librement sur la structure de base 64 sur une course radiale de dilatation donnée.

De même, la coiffe 66 est posée sans être fixée sur au moins une des parois 60, 62, permettant le déplacement radial libre de chaque paroi, 60, 62 par rapport à la coiffe 66 sur la course de dilatation donnée.

Dans cet exemple, la structure de base 64 comporte un patin 78 portant les parois ajourées 60, 62, le patin 78 étant monté glissant sur la surface de glissement 46 du support 20. La structure de base 64 comporte en outre un déflecteur tubulaire 80 disposé en regard de l'une des parois 60, 62.

Le patin 78 comprend une plaque de base 82. Il comporte avantageusement un rebord 84 intérieur, et au moins une saillie 86 de positionnement des parois 60, 62 disposée entre le rebord intérieur 84 et le déflecteur 80.

La plaque de base 82 est pleine. Elle présente une forme d'anneau de révolution autour de l'axe A-A'. Elle repose sur la surface 46 et est apte à glisser sur cette surface 46 lors des déplacements des parois ajourées 60, 62, sous l'effet de leur dilatation.

Le rebord 84 fait saillie le long du bord intérieur de la plaque de base 82. Il présente une hauteur inférieure à celle du déflecteur 80.

Chaque saillie de positionnement 86 fait saillie à partir de la plaque 82, dans l'espace intermédiaire 70 entre les parois ajourées 60, 62. Elle présente avantageusement une forme convergente vers le haut pour faciliter le guidage des parois ajourées 60, 62 lors de leur montage sur la structure de base 64.

Le patin 78 porte au moins une saillie de positionnement 86, et porte avantageusement une pluralité de saillies de positionnement 86 réparties angulairement autour de l'axe A-A'.

Le déflecteur 80 fait saillie vers le haut à partir du bord extérieur du patin 78. Il est formé par une paroi pleine circonférentielle s'étendant sur toute la hauteur de la paroi ajourée 60, 62.

Dans cet exemple, le déflecteur 80 s'étend en regard et à l'écart radialement de la paroi amont 60, sur toute la hauteur de la paroi amont 60.

Comme illustré par la figure 3, chaque déflecteur 80, à l'exception du déflecteur du panier 22A le plus à l'extérieur, s'étend également en regard de la paroi aval 62 d'un panier 22A à 22E situé extérieurement par rapport au panier 22B à 22D.

Chaque déflecteur 80 définit donc avec la paroi amont 60 en regard duquel il est situé, un passage amont 90 d'amenée du flux amont. Le passage amont 90 débouche vers le haut dans la partie amont 16 de l'enceinte 12. Il est obturé vers le bas par le patin 78 et est obturé latéralement vers l'extérieur par le déflecteur 80.

Le passage amont 90 est délimité latéralement vers l'intérieur par la paroi amont 60. Il s'étend continûment autour de l'axe A-A'.

Chaque paroi aval 62, lorsqu'elle est située en regard du déflecteur 80 d'un panier 22A à 22C situé intérieurement par rapport au panier 22A à 22E, délimite avec le déflecteur 80 en regard, un passage d'évacuation 92 du flux traité.

Le passage d'évacuation 92 débouche vers le bas dans la partie aval 18 de l'enceinte 12, à travers les ouvertures de passage 36 présentes dans le support 20. Le passage d'évacuation 92 est délimité de manière étanche vers le haut par la coiffe 66. Il s'étend continûment autour de l'axe A-A'.

Chaque déflecteur 80 comporte en outre avantageusement une tablette de support 94 d'un ensemble de fixation 96 de la coiffe 66 d'un panier adjacent, et une gouttière auxiliaire 98 de réception d'un joint de l'ensemble d'étanchéité 68.

La coiffe 66 chevauche les parois ajourées 60, 62 et avantageusement le déflecteur 80 d'un panier 22A à 22E adjacent. Elle est fixée sur le déflecteur 80 d'un panier adjacent 22A à 22E par l'intermédiaire de l'ensemble de fixation 96.

L'ensemble d'étanchéité 68 comporte une chicane inférieure 100 faisant saillie dans l'espace intermédiaire 70 et des joints 102, 104 d'étanchéité reçus respectivement dans les gouttières 77, 98.

La chicane 100 est formée par une saillie annulaire disposée dans l'espace intermédiaire 70. La chicane 100 fait saillie vers le haut à partir du patin 78 en s'étendant de manière continue autour de l'axe A-A'.

La chicane 100 est recouverte par du produit solide 24. Ainsi, la chicane 100 force le flux amont entrant dans l'espace intermédiaire 70 à entrer en contact avec le produit solide 24 et l'empêche de passer sous le produit solide 24, compte tenu de la déflection apportée par la chicane 100.

Les joints d'étanchéité 102, 104 sont reçus respectivement dans les gouttières 77, 98.

Le joint d'étanchéité 102 est propre à empêcher le passage du flux amont entre la coiffe 66 et la paroi amont 60 tout en laissant un degré de glissement radial entre la paroi amont 60 et la coiffe 66.

Le joint d'étanchéité auxiliaire 104 est disposé entre la coiffe 66 et le déflecteur 80 adjacent 80 pour empêcher le flux traité de passer entre le déflecteur adjacent 80 et la coiffe 66.

Dans l'exemple représenté sur la figure 1, la coiffe 66 du panier 22D situé le plus à l'intérieur par rapport à l'axe A-A' est fixée sur la tige centrale 42, et non sur un déflecteur. Le passage d'évacuation 92 est alors délimité entre la tige 42 et la paroi aval 62 du panier 22D.

Par ailleurs, le déflecteur 80A du panier 22A situé le plus à l'extérieur par rapport à l'axe A-A' s'étend de manière inclinée par rapport à l'axe A-A'. Il est formé par une paroi pleine tronconique guidant le flux amont vers la base 30.

Le déflecteur 80A du panier 22A est fixé sur la partie extérieure 32 par l'intermédiaire d'un organe 110 d'absorption des dilatations. L'organe 110 est formé par un soufflet continu, par exemple de section transversale en forme de J.

L'organe 110 est propre à absorber les dilatations différentielles entre le déflecteur 80A et la partie extérieure fixe 32 et entre le déflecteur 80A et les tirants 52.

Ainsi, les différents éléments constituant les paniers 22A à 22E sont aptes à se dilater radialement de manière différentielle les uns par rapport aux autres, et par rapport au support 20. Ainsi, chaque paroi ajourée 60, 62 est apte à se dilater de manière différentielle par rapport à la paroi ajourée 62, 60 en regard de laquelle elle est située par glissement radial entre la structure de base 64 et la coiffe 66. En outre, chaque patin 78 est apte à se dilater et à se déplacer par glissement sur la surface de glissement 46 pour compenser les dilatations différentielles éventuelles.

Le déflecteur extérieur 80A est en outre apte à se dilater librement par rapport à la partie extérieure 32 et les tirants 52 par l'intermédiaire de l'organe d'absorption 110.

Ceci permet au dispositif 14 de contenir un produit solide 24 de manière confinée, tout en conservant son intégrité de structure, notamment lorsque la différence de température entre le flux amont et le flux aval est très élevée.

Dans cet exemple, les paniers 22A à 22E sont fabriqués à base de métal, notamment en acier. En particulier, les parois ajourées 60, 62 et les structures de bases 60 sont métalliques.

Le montage du dispositif 14 va maintenant être décrit.

Initialement, les structures de base 64 sont posées sans être fixées sur la surface de glissement 46 de la base ajourée 30. Puis, les parois ajourées 60, 62 respectives de chaque panier 22A à 22E sont posées sans être fixées sur une structure de base 64 associée, avantageusement en étant guidées par les saillies 86.

L'espace intermédiaire 70 entre chaque paire de parois ajourées 60, 62 est alors ouvert vers le haut. Le produit solide 24 est déposé dans chaque espace intermédiaire 70 pour le remplir jusqu'à un niveau allant au-dessus de la région ajourée 72.

Ensuite, les joints d'étanchéité 102, 104 sont montés dans les gouttières respectives 77, 98. Les coiffes 66 sont alors posées pour chevaucher les parois ajourées 60, 62 et un déflecteur adjacent 80.

Les ensembles de fixation 96 sont alors mis en place. Une course de dilatation radiale existe cependant, entre chaque paroi ajourée 60, 62 et la structure de base 64 sur laquelle elle est posée, et entre chaque paroi ajourée 60, 62 et la coiffe 66.

De même, les structures de base 64 sont juste posées sur la surface de glissement 46 en étant aptes à glisser sur cette surface 46.

Une fois les coiffes 66 montées, le dispositif 14 délimite une pluralité de passages d'amenée 90 du flux amont qui débouchent en amont dans la partie amont 16. Elles délimitent en outre une pluralité de passages 92 d'évacuation de flux traité qui débouchent en aval dans la partie aval 18 à travers les ouvertures de passage 36 ménagées dans la base 30.

Le dispositif 14 délimite entre chaque paire de parois ajourées 60, 62 l'espace intermédiaire 70 recevant de manière confinée le produit solide 24.

Le fonctionnement du dispositif 14 va maintenant être décrit.

Initialement, un flux amont est engendré en amont du dispositif 14, dans la partie amont 16. Ce flux amont présente une température élevée et une pression faible à élevée. La température du flux amont est par exemple supérieure à 750° C et sa pression est par exemple supérieure à 1 bars.

Comme visible sur la Figure 4, le flux amont s'écoule alors à travers les passages amont 90. Les passages amont 90 étant obturés vers le bas par les patins 78 et vers l'extérieur par le déflecteur 80, le flux amont s'écoule radialement vers l'espace intermédiaire 70 à travers la paroi ajourée amont 60.

Le flux amont pénètre alors dans l'espace intermédiaire 70. Il entre en contact avec le produit solide 24 pour subir un traitement visant par exemple à oxyder un composant ou à abattre un gaz à éliminer.

Il forme alors un flux aval traité qui passe à travers la paroi aval 62, puis est guidé dans le passage d'évacuation 92 avant de ressortir hors de la base 30 dans la partie aval 18 par l'intermédiaire des ouvertures de passage 36.

Lors de l'utilisation du dispositif 14, et notamment lors du démarrage de l'installation 10, la différence de température entre le flux amont présent dans le passage amont 90 et le flux aval présent dans le passage aval 92 peut être significative, notamment supérieure à 100°C, par exemple supérieur à 200° C.

Cette différence notable de température provoque une dilatation différentielle entre la paroi amont 60 et la paroi aval 62 de chaque panier 22A à 22E, représentée schématiquement par des flèches de longueur variable sur la Figure 4.

Ainsi, la paroi amont 60 est soumise à une température supérieure à celle de la paroi aval 62. La dilatation radiale vers l'extérieur de la paroi amont 60 est donc supérieure à celle de la paroi aval 62. L'espace intermédiaire 70 s'élargit donc librement.

La paroi amont 60 se déplace donc radialement vers l'extérieur par glissement entre la structure de base 64 et la coiffe 66 sur une course radiale supérieure à la course radiale de la paroi aval 62.

Toutefois, un excès de produit 24 étant présent dans la partie située en regard de la zone pleine 74, le niveau de produit solide 24 redescend, tout en restant en permanence au-dessus de la région ajourée 72. Le flux amont entre donc toujours en contact avec du produit solide 24 avant de passer avant à travers la paroi aval 62.

De plus, la dilatation différentielle des parois ajourées 60, 62 se fait par simple glissement sur le patin 68 et sous la coiffe 66. Aucune contrainte mécanique n'apparaît donc entre la paroi 60 et la paroi 62.

De plus, les dilatations différentielles pouvant se produire entre les structures de base 64 qui présentent une épaisseur faible et la base ajourée 30 qui présente une épaisseur largement supérieure à celle des structures de base 64 sont compensées par le glissement des structures de base 64 sur la surface de glissement 46.

Le seul point fixe des paniers 22A à 22E situé au niveau du déflecteur extérieur 80A est également compensé en dilatation par la présence de l'organe d'absorption 110.

Le dispositif 14 est apte à supporter les fortes différences de température auquel il est soumis, notamment au démarrage et à l'arrêt de l'installation, ou lorsque des paramètres de procédé sont modifiés.

Par suite, le dispositif 14 est très fiable pour traiter le flux circulant à travers l'installation 10, notamment lorsqu'une grande différence de température existe entre le flux amont pénétrant dans le dispositif 14 et le flux aval traité issu du dispositif 14.

Le dispositif 14 est donc particulièrement efficace pour réaliser un traitement, tel qu'une oxydation, qu'un abattement de gaz devant être éliminé du flux amont. L'invention qui vient d'être décrite est en outre simple à mettre en oeuvre et limite le coût du procédé.

Par ailleurs, le flux amont étant dirigé dans les paniers 22A à 22E depuis l'extérieur vers l'intérieur, la dilatation différentielle entre la paroi amont 60 et la paroi aval 62 conduit à une expansion de l'espace intermédiaire 70 entre ces parois 60, 62, ce qui limite le risque de détérioration mécanique.

La présence d'une pluralité de paniers concentriques 22A à 22E réduit les pertes de charge en diminuant l'épaisseur de produit solide 24 présent dans chaque panier 22A à 22E, tout en conservant une capacité de traitement analogue.

Plus généralement, le dispositif 14 selon l'invention est apte à traiter un flux amont quelconque, tel que le flux résultant de la transformation de l'ammoniaque.

## Revendications

1. Dispositif (14) de traitement d'un flux amont sur un produit solide (24), comportant :
- un support (20) ;
- au moins un panier (22A à 22E) porté par le support (20), le panier (22A à 22E) comportant une paroi ajourée amont (60) et une paroi ajourée aval (62) délimitant entre elles un espace intermédiaire (70) de réception du produit solide (24), la paroi ajourée amont (60) délimitant, à l'opposé de l'espace intermédiaire (70), un passage (90) d'amenée du flux amont, la paroi ajourée aval (62) délimitant, à l'opposé de l'espace intermédiaire (70), un passage (92) d'évacuation d'un flux traité ;
**caractérisé en ce que** la paroi ajourée amont (60) et la paroi ajourée aval (62) sont montées librement déplaçables l'une par rapport à l'autre et par rapport au support (20), sur une course de dilatation donnée.

2. Dispositif (14) selon la revendication 1, **caractérisé en ce que** la paroi ajourée amont (60) et la paroi ajourée aval (62) sont de révolution autour d'un axe central (A-A'), la paroi ajourée amont (60) et la paroi ajourée aval (62) étant montées librement déplaçables radialement par rapport à l'axe central (A-A') sur la course de dilatation donnée.

3. Dispositif (14) selon la revendication 2, **caractérisé en ce que** le passage (90) d'amenée du flux amont est situé radialement à l'extérieur par rapport au passage (92) d'évacuation du flux traité vis-à-vis de l'axe central (A-A').

4. Dispositif (14) selon l'une quelconque des revendications précédentes, **caractérisé en ce que** chaque panier (22A à 22E) comporte une structure de base (64), la paroi ajourée amont (60) et la paroi ajourée aval (62) étant posées sur la structure de base (64), la paroi ajourée amont (60) et la paroi ajourée aval (62) étant montées glissantes sur la structure de base (64), la structure de base (64) étant avantageusement montée glissante sur le support (20).

5. Dispositif (14) selon la revendication 4, **caractérisé en ce que** la structure de base (64) comporte un déflecteur (80) destiné à être placé en regard de la paroi ajourée amont (60) pour délimiter le passage d'amenée (90) et/ou en regard d'une paroi ajourée aval (62) pour délimiter le passage d'évacuation (92).

6. Dispositif (14) selon la revendication 5, **caractérisé en ce qu'**au moins une structure de base (64) délimite un déflecteur extérieur (80A), le déflecteur extérieur (80A) étant relié au support (20) par l'intermédiaire d'un organe (110) d'absorption des dilatations, avantageusement d'un soufflet de dilatation.

7. Dispositif (14) selon l'une quelconque des revendications précédentes, **caractérisé en ce qu'**il comporte une chicane (100) destinée à être insérée dans une partie inférieure de l'espace intermédiaire (70) pour être recouverte de produit solide (24).

8. Dispositif (14) selon l'une quelconque des revendications précédentes, **caractérisé en ce que** le panier (22A à 22E) comporte une coiffe (66) disposée au-dessus de la paroi ajourée amont (60) et de la paroi ajourée aval (62), un joint d'étanchéité (102) étant inséré entre la coiffe (66) et la paroi ajourée amont (60).

9. Dispositif (14) selon l'une quelconque des revendications précédentes, **caractérisé en ce que** la paroi ajourée amont (60) comporte une région supérieure pleine (74), et une région inférieure ajourée (72), la région supérieure pleine (74) et la région inférieure ajourée (72) étant destinées à être placées en regard du passage d'amenée (90).

10. Dispositif (14) selon l'une quelconque des revendications précédentes, **caractérisé en ce qu'**il comporte une pluralité de paniers (22A à 22E), chaque panier (22A à 22E) comprenant une paroi ajourée amont (60) et une paroi ajourée aval (62) montées librement déplaçables sur une course de dilatation donnée, les paniers (22A à 22E) étant disposés les uns dans les autres.

11. Dispositif (14) selon l'une quelconque des revendications précédentes, **caractérisé en ce que** le support (20) présente une pluralité d'ouvertures (36) de passage de flux, au moins un parmi le passage d'amenée (90) et le passage d'évacuation (92) débouchant en regard des ouvertures de passage (36).

12. Dispositif (14) selon l'une quelconque des revendications précédentes, **caractérisé en ce que** le support (20) comprend une partie fixe extérieure (32) et une base (30) portant le ou chaque panier (22A à 22E), la base (30) étant librement déplaçable sur une course de dilatation par rapport à la partie fixe extérieure (32), avantageusement en étant articulée par l'intermédiaire d'une pluralité de tirants (52).

13. Procédé de traitement d'un flux amont sur un produit solide (24), le procédé comportant les étapes suivantes :
- fourniture d'un dispositif (14) selon l'une quelconque des revendications précédentes, le ou chaque panier (22A à 22E) comportant un produit solide (24) de traitement dans son espace intermédiaire (70) ;
- amenée d'un flux amont dans le passage d'amenée (92) ;
- passage du flux amont à travers la paroi ajourée amont (60), et mise en contact du flux amont avec le produit solide (24) pour engendrer un flux aval traité ;
- évacuation du flux aval à travers la paroi ajourée aval (62) et à travers le passage d'évacuation (92) ;
**caractérisé en ce que** la paroi ajourée amont (60) et la paroi ajourée aval (62) se déplacent librement l'une par rapport à l'autre et par rapport au support (20) sur une course de dilatation donnée lors de la mise en oeuvre des étapes précédentes.

14. Procédé selon la revendication 13, **caractérisé en ce que** la différence de température entre le flux amont et le flux aval est supérieure à 100° C, avantageusement supérieure à 250° C.

15. Procédé selon l'une quelconque des revendications 13 ou 14, **caractérisé en ce que** le flux amont est un flux gazeux, notamment un flux contenant un oxyde d'azote, le produit de traitement solide étant un catalyseur, notamment un catalyseur d'oxydation ou un catalyseur d'abattement d'un gaz à éliminer.

## Patentansprüche

1. Vorrichtung (14) zur Behandlung eines Aufwärtsstromes auf einem Festprodukt (24), umfassend:
- eine Stütze (20);
- mindestens einen Korb (22A bis 22E), der von der Stütze (20) getragen wird, wobei der Korb (22A bis 22E) eine stromaufwärtige gelochte Wand (60) und eine stromabwärtige gelochte Wand (62) umfasst, die zwischen sich einen Zwischenraum (70) für die Aufnahme des Festproduktes (24) begrenzen, wobei die stromaufwärtige gelochte Wand (60) gegenüber dem Zwischenraum (70) einen Durchgang (90) für die Zuleitung des Aufwärtsstromes begrenzt, wobei die stromabwärtige gelochte Wand (62) gegenüber dem Zwischenraum (70) einen Durchgang (92) für die Ableitung eines behandelten Stromes begrenzt;
**dadurch gekennzeichnet, dass** die stromaufwärtige gelochte Wand (60) und die stromabwärtige gelochte Wand (62) frei zueinander und zur Stütze (20) auf einem gegebenen Ausdehnungsweg verschiebbar montiert sind.

2. Vorrichtung (14) nach Anspruch 1, **dadurch gekennzeichnet, dass** die stromaufwärtige gelochte Wand (60) und die stromabwärtige gelochte Wand (62) um eine Mittelachse (A-A') umdrehend sind, wobei die stromaufwärtige gelochte Wand (60) und die stromabwärtige gelochte Wand (62) radial frei in Bezug zur Mittelachse (A-A') auf dem gegebenen Ausdehnungsweg verschiebbar montiert sind.

3. Vorrichtung (14) nach Anspruch 2, **dadurch gekennzeichnet, dass** der Durchgang (90) für die Zuleitung des Aufwärtsstromes radial außen in Bezug zu dem Durchgang (92) für die Ableitung des behandelten Stromes gegenüber der Mittelachse (A-A') angeordnet ist.

4. Vorrichtung (14) nach einem der vorhergehenden Ansprüche, **dadurch gekennzeichnet, dass** jeder Korb (22A bis 22E) eine Basisstruktur (64) umfasst, wobei die stromaufwärtige gelochte Wand (60) und die stromabwärtige gelochte Wand (62) auf die Basisstruktur (64) gestellt sind, wobei die stromaufwärtige gelochte Wand (60) und die stromabwärtige gelochte Wand (62) gleitend auf der Basisstruktur (64) montiert sind, wobei die Basisstruktur (64) vorteilhafterweise auf der Stütze (20) gleitend montiert ist.

5. Vorrichtung (14) nach Anspruch 4, **dadurch gekennzeichnet, dass** die Basisstruktur (64) ein Ablenkblech (80) umfasst, das dazu bestimmt ist, gegenüber der stromaufwärtigen gelochten Wand (60) angeordnet zu werden, um den Zuleitungsdurchgang (90) zu begrenzen, und/oder gegenüber einer stromabwärtigen gelochten Wand (62) angeordnet zu werden, um den Ableitungsdurchgang (92) zu begrenzen.

6. Vorrichtung (14) nach Anspruch 5, **dadurch gekennzeichnet, dass** mindestens eine Basisstruktur (64) ein äußeres Ablenkblech (80A) begrenzt, wobei das äußere Ablenkblech (80A) mit der Stütze (20) mit Hilfe eines Dehnungsausgleichelements (110), vorzugsweise eines Dehnungsbalgs, verbunden ist.

7. Vorrichtung (14) nach einem der vorhergehenden Ansprüche, **dadurch gekennzeichnet, dass** sie eine Schikane (100) umfasst, die dazu bestimmt ist, in einen unteren Teil des Zwischenraums (70) eingesetzt zu werden, um mit Festprodukt (24) bedeckt zu werden.

8. Vorrichtung (14) nach einem der vorhergehenden Ansprüche, **dadurch gekennzeichnet, dass** der Korb (22A bis 22E) eine Abdeckung (66) umfasst, die über der stromaufwärtigen gelochten Wand (60) und der stromabwärtigen gelochten Wand (62) angeordnet ist, wobei eine Dichtung (102) zwischen der Abdeckung (66) und der stromaufwärtigen gelochten Wand (60) eingesetzt ist.

9. Vorrichtung (14) nach einem der vorhergehenden Ansprüche, **dadurch gekennzeichnet, dass** die stromaufwärtige gelochte Wand (60) einen vollen oberen Bereich (74) und einen gelochten unteren Bereich (72) umfasst, wobei der volle obere Bereich (74) und der gelochte untere Bereich (72) dazu bestimmt sind, gegenüber dem Zuleitungsdurchgang (90) angeordnet zu werden.

10. Vorrichtung (14) nach einem der vorhergehenden Ansprüche, **dadurch gekennzeichnet, dass** sie eine Vielzahl von Körben (22A bis 22E) umfasst, wobei jeder Korb (22A bis 22E) eine stromaufwärtige gelochte Wand (60) und eine stromabwärtige gelochte Wand (62) umfasst, die auf einem gegebenen Ausdehnungsweg frei verschiebbar montiert sind, wobei die Körbe (22A bis 22E) ineinander angeordnet sind.

11. Vorrichtung (14) nach einem der vorhergehenden Ansprüche, **dadurch gekennzeichnet, dass** die Stütze (20) eine Vielzahl von Stromdurchgangsöffnungen (36) aufweist, wobei mindestens einer von dem Zuleitungsdurchgang (90) und dem Ableitungsdurchgang (92) gegenüber den Durchgangsöffnungen (36) mündet.

12. Vorrichtung (14) nach einem der vorhergehenden Ansprüche, **dadurch gekennzeichnet, dass** die Stütze (20) einen festen äußeren Teil (32) und eine Basis (30), die den oder jeden Korb (22A bis 22E) trägt, umfasst, wobei die Basis (30) auf einem Ausdehnungsweg in Bezug zum festen äußeren Teil (32) frei verschiebbar ist, wobei sie vorteilhafterweise mit Hilfe einer Vielzahl von Zugstangen (52) angelenkt ist.

13. Verfahren zur Behandlung eines Aufwärtsstromes auf einem Festprodukt (24), wobei das Verfahren die folgenden Schritte umfasst:
- Bereitstellung einer Vorrichtung (14) nach einem der vorhergehenden Ansprüche, wobei der oder jeder Korb (22A bis 22E) ein Festprodukt (24) zur Behandlung in seinem Zwischenraum (70) umfasst;
- Zuleitung eines Aufwärtsstromes in dem Zuleitungsdurchgang (92);
- Durchgang des Aufwärtsstromes durch die stromaufwärtige gelochte Wand (60) und Kontaktnahme des Aufwärtsstromes mit dem Festprodukt (24), um einen behandelten Abwärtsstrom zu erzeugen;
- Ableitung des Abwärtsstromes durch die stromabwärtige gelochte Wand (62) und durch den Ableitungsdurchgang (92);
**dadurch gekennzeichnet, dass** sich die stromaufwärtige gelochte Wand (60) und die stromabwärtige gelochte Wand (62) frei in Bezug zueinander und in Bezug zu der Stütze (20) auf einem gegebenen Ausdehnungsweg beim Einsatz der vorherigen Schritte verschieben.

14. Verfahren nach Anspruch 13, **dadurch gekennzeichnet, dass** der Temperaturunterschied zwischen dem stromaufwärtigen Strom und dem stromabwärtigen Strom größer als 100 °C, vorteilhafterweise größer als 250 °C, ist.

15. Verfahren nach einem der Ansprüche 13 oder 14, **dadurch gekennzeichnet, dass** der Aufwärtsstrom ein Gasstrom ist, insbesondere ein Strom, der Stickstoffoxid enthält, wobei das Festprodukt zur Behandlung ein Katalysator ist, insbesondere ein Oxidationskatalysator oder ein Katalysator zur Beseitigung eines abzuleitenden Gases.

## Claims

1. Device (14) for treating an upstream flow over a solid product (24), comprising:
- a support (20);
- at least one basket (22A to 22E) supported by the support (20), the basket (22A to 22E) comprising an upstream perforated wall (60) and a downstream perforated wall (62) which between them delimit an intermediate space (70) for housing the solid product (24), the upstream perforated wall (60) delimiting, on the opposite side to the intermediate space (70), an upstream flow conveying passage (90), the downstream perforated wall (62) delimiting, on the opposite side to the intermediate space (70), a passage (92) for discharging a treated flow;
**characterized in that** the upstream perforated wall (60) and the downstream perforated wall (62) are mounted freely movable relative to one another and relative to the support (20), over a given expansion travel.

2. Device (14) according to Claim 1, **characterized in that** the upstream perforated wall (60) and the downstream perforated wall (62) are of revolution about a central axis (A-A'), the upstream perforated wall (60) and the downstream perforated wall (62) being mounted free to move radially relative to the central axis (A-A') over the given expansion travel.

3. Device (14) according to Claim 2, **characterized in that** the passage (90) for conveying the upstream flow is situated radially on the outside relative to the passage (92) for discharging the treated flow with respect to the central axis (A-A').

4. Device (14) according to any one of the preceding claims, **characterized in that** each basket (22A to 22E) comprises a base structure (64), the upstream perforated wall (60) and the downstream perforated wall (62) being placed on the base structure (64), the upstream perforated wall (60) and the downstream perforated wall (62) being slidably mounted on the base structure (64), the base structure (64) advantageously being slidably mounted on the support (20).

5. Device (14) according to Claim 4, **characterized in that** the base structure (64) comprises a deflector (80) intended to be positioned facing the upstream perforated wall (60) to delimit the conveying passage (90) and/or facing a downstream perforated wall (62) to delimit the discharge passage (92).

6. Device (14) according to Claim 5, **characterized in that** at least one base structure (64) delimits an exterior deflector (80A), the exterior deflector (80A) being connected to the support (20) via an expansion absorbing member (110), advantageously an expansion bellows.

7. Device (14) according to any one of the preceding claims, **characterized in that** it comprises a baffle (100) intended to be inserted in a lower part of the intermediate space (70) to be covered with solid product (24).

8. Device (14) according to any one of the preceding claims, **characterized in that** the basket (22A to 22E) comprises a cover (66) positioned over the upstream perforated wall (60) and the downstream perforated wall (62), a seal (102) being inserted between the cover (66) and the upstream perforated wall (60).

9. Device (14) according to any one of the preceding claims, **characterized in that** the upstream perforated wall (60) comprises a solid upper region (74), and a perforated lower region (72), the solid upper region (74) and the perforated lower region (72) being intended to be positioned facing the conveying passage (90).

10. Device (14) according to any one of the preceding claims, **characterized in that** it comprises a plurality of baskets (22A to 22E), each basket (22A to 22E) comprising an upstream perforated wall (60) and a downstream perforated wall (62) which are mounted with the freedom to move over a given expansion travel, the baskets (22A to 22E) being positioned one inside the other.

11. Device (14) according to any one of the preceding claims, **characterized in that** the support (20) has a plurality of openings (36) through which flow can pass, of the conveying passage (90) and the discharge passage (92) at least one opening facing the passage openings (36).

12. Device (14) according to any one of the preceding claims, **characterized in that** the support (20) comprises an exterior fixed part (32) and a base (30) supporting the or each basket (22A to 22E), the base (30) being free to move over an expansion travel relative to the exterior fixed part (32), advantageously by being articulated via a number of tie bolts (52).

13. Method for treating an upstream flow over a solid product (24), the method comprising the following steps:
- providing a device (14) according to any one of the preceding claims, the or each basket (22A to 22E) comprising a solid treatment product (24) in its intermediate space (70);
- conveying an upstream flow in the conveying passage (92);
- passing the upstream flow through the upstream perforated wall (60) and bringing the upstream flow into contact with the solid product (24) to generate a treated downstream flow;
- removing the downstream flow through the downstream perforated wall (62) and through the discharge passage (92);
**characterized in that** the upstream perforated wall (60) and the downstream perforated wall (62) move freely relative to one another and relative to the support (20) over a given expansion travel when the preceding steps are being carried out.

14. Method according to Claim 13, **characterized in that** the temperature difference between the upstream flow and the downstream flow is greater than 100°C, advantageously greater than 250°C.

15. Method according to either one of Claims 13 and 14, **characterized in that** the upstream flow is a gaseous flow, notably a flow containing an oxide of nitrogen, the solid treatment product being a catalyst, notably an oxidation catalyst or a catalyst for the abatement of a gas that is to be eliminated.
